# EUROPÄISCHE PATENTSCHRIFT

(11) **EP 3 211 691 B1**
(45) Veröffentlichungstag und Bekanntmachung des Hinweises auf die Patenterteilung: **08.05.2019**
(21) Anmeldenummer: 16000434.7
(22) Anmeldetag: 23.02.2016
(51) Int. Cl.: H01M 2/10, H01M 2/12, H01M 10/48

(54) **BATTERIEGEHÄUSE**
BATTERY CASING
BOITIER DE BATTERIE

(43) Veröffentlichungstag der Anmeldung: 30.08.2017
(73) Patentinhaber: Torqeedo GmbH, 82205 Gilching (DE)
(72) Erfinder: HARTMEYER, Marc, 82205 Gilching (DE)
(74) Vertreter: Nordmeyer, Philipp Werner

(56) Entgegenhaltungen:
- EP-A1- 2 843 727
- WO-A1-2015/150111
- DE-A1-102011 077 676
- DE-A1-102011 103 986
- GB-A- 1 235 693
- JP-A- 2004 203 073
- US-A- 5 876 872
- US-A1- 2014 242 429

## Beschreibung

Die Erfindung betrifft ein Gehäuse, welches eine oder mehrere Komponenten enthält, wobei mindestens eine der Komponenten eine elektrische Komponente ist, wobei die Komponenten das Gehäuse nicht vollständig ausfüllen und innerhalb des Gehäuses ein Hohlraum verbleibt. Außerdem bezieht sich die Erfindung auf ein Boot, welches ein solches Gehäuse enthält.

Boote mit Elektroantrieb besitzen an Bord Batterien als Energiespeicher. LithiumIonen-Batterien sind hierbei bevorzugte Energiespeicher für elektrische Antriebssysteme auf Booten. Je nach benötigter Energiemenge, benötigter Spannungshöhe des Antriebssystems, verwendeter Zellchemie und Zellkapazität wird die Batterie als Reihen-und /oder Serienschaltung von Einzelzellen realisiert.

Bei einer Bootsanwendung sind die elektrischen Komponenten, wie die Batterie, einer erhöhten Luftfeuchte und Spritzwasser ausgesetzt. Wasser, welches in das Batteriegehäuse eindringt, führt zusammen mit den Zellenspannungen der Batterie zu Elektrolyse, wobei leicht entzündlicher Wasserstoff erzeugt wird.

Batterien, die für den Einsatz auf Booten konzipiert sind, sind daher gemäß Schutzart IP67 wasserdicht auszuführen. Für den Fall des Eindringens von Wassers ins Boot oder im Fall einer Havarie dürfen keine spannungsführenden Teile mit dem Wasser in Kontakt kommen. Zur Realisierung dieser Schutznorm wird die Batterie mit einem wasserdichten Batteriegehäuse versehen.

Das Eindringen von Wasser kann aber auch mit wasserdichten Gehäusen nicht immer vollständig verhindert werden. Die Dichtheit der Gehäuse ist nur über einen gewissen Zeitraum und bei einem bestimmten Wasserdruck gewährleistet, beispielsweise über 30 Minuten in 1 Meter Wassertiefe.

Wenn allerdings eine Batterie über Bord geht oder ein Boot sinkt, sind die elektrischen Komponenten häufig länger und tiefer unter Wasser. Dann besteht die Gefahr, dass Wasser in das Batteriegehäuse eindringt und es zu einer Elektrolysereaktion und zur Freisetzung von Wasserstoff kommt. Beim Bergen der Batterie oder des Bootes ist dann das Risiko einer Entzündung durch Funken oder heiße Oberflächen gegeben.

DE 10 2011 077 676 A1 zeigt eine Batteriezelle, eine Batteriezellenmodul, eine Batterei und ein Kraftfahrzeug. US 5 876 872 A offenbart ein Gehäuse für ein Unterwasserfahrzeug.

Aufgabe vorliegender Erfindung ist es daher, die Bildung und Ansammlung von Wasserstoff in einem Gehäuse, welches elektrische Komponenten enthält, zu reduzieren. Insbesondere soll die Bildung von Wasserstoff minimiert werden.

Diese Aufgabe wird durch ein Gehäuse für elektrische Komponenten in Booten gelöst, wobei das Gehäuse wasserdicht ausgestaltet ist und eine oder mehrere Komponenten enthält, wobei mindestens eine der Komponenten eine elektrische Komponente ist, wobei mindestens eine der elektrischen Komponenten eine Batterie oder ein Akkumulator, insbesondere ein Lithiumionen enthaltender Akkumulator, ist, wobei die Komponenten das Gehäuse nicht vollständig ausfüllen und innerhalb des Gehäuses ein Hohlraum verbleibt, wobei in dem Hohlraum ein oder mehrere Füllelemente vorgesehen sind, wobei die Füllelemente durch in das Gehäuse eindringendes Wasser bei Kontakt mit dem Wasser ihr Volumen derart ändern, dass sie den Hohlraum zu mehr als der Hälfte ausfüllen.

Die Erfindung zielt darauf ab, dem in das Gehäuse eindringenden Wasser und dem bei einer eventuellen Elektrolyse entstehenden Gas möglichst wenig Platz zu bieten. Dadurch soll insbesondere die Gasmenge unter der kritischen Menge gehalten werden, bei der das Gehäuse unkontrolliert explodiert.

Die elektrische Komponente, beispielsweise eine Batterie, ist erfindungsgemäß in einem Gehäuse untergebracht. Gegebenenfalls befinden sich auch noch weitere elektrische oder nicht-elektrische Komponenten in dem Gehäuse. Die elektrische Komponente und die eventuellen weiteren Komponenten füllen das Innere des Gehäuses nicht vollständig aus, so dass ein oder mehrere Hohlräume in dem Gehäuse verbleiben.

Soweit nicht anders angegeben, sollen mit der Einzahl "Hohlraum" im Folgenden auch mehrere Hohlräume verstanden werden, die miteinander verbunden sein können oder auch getrennt voneinander sind.

Im Falle eines Unfalls, wenn das Gehäuse unter Wasser gerät, können sich die Hohlräume mit Wasser füllen. Elektrische Anschlüsse an der elektrischen Komponente, beispielsweise die Pole einer Batterie, können dann als Elektroden wirken und eine Elektrolysereaktion, das heißt eine Zerlegung des Wassers in Wasserstoff und Sauerstoff, bewirken. Das entstehende Gas verteilt sich im Inneren des Gehäuses, wodurch der Druck im Gehäuse ansteigt und es im schlimmsten Fall zu einer Explosion des Gehäuses kommt.

Erfindungsgemäß sind daher in dem Hohlraum oder in den Hohlräumen ein oder mehrere Füllelemente vorgesehen, welche bei Kontakt mit Wasser den Hohlraum zu mehr als 50% ausfüllen, das heißt das Volumen des Hohlraums oder der Hohlräume ist zu mehr als 50% mit den Füllelementen belegt. In einer bevorzugten Variante der Erfindung füllen die Füllelemente bei Kontakt mit Wasser den Hohlraum zu mehr als 70%, zu mehr als 80% oder zu mehr als 90% aus.

Die Füllelemente füllen den Hohlraum zumindest dann zu dem angegebenen Grad aus, wenn sie in Kontakt mit Wasser kommen. Das Volumen der Füllkörper kann den Hohlraum aber auch bereits im "trockenen" Zustand wie angegeben ausfüllen, das heißt bevor Wasser in den Hohlraum gelangt ist. Das Volumen der Füllkörper ist bei dieser Ausführung im Wesentlichen unabhängig vom Kontakt mit Wasser.

Die Füllkörper sind erfindungsgemäß so ausgeführt, dass sich deren Volumen erst bei Kontakt mit Wasser ändert, das heißt dann, wenn das Gehäuse unter Wasser kommt und Wasser in den oder die Hohlräume eindringt. In jedem Fall wird der Hohlraum, sobald der oder die Füllkörper mit Wasser in Kontakt gekommen sind, zu mehr als 50%, mehr als 70%, mehr als 80% oder mehr als 90% gefüllt. Es verbleibt daher nur noch ein entsprechend kleinerer Resthohlraum, in dem sich Wasser und/oder Gas sammeln können. Auf diese Weise wird die für eine eventuelle Elektrolyse zur Verfügung stehende Wassermenge beschränkt und die entstehende Gasmenge auf einem unbedenklichen Wert gehalten. Im Gehäuse kann sich nur noch eine geringe Menge Wasserstoff ansammeln, wodurch die Gefahr einer Explosion ausgeschlossen oder zumindest stark reduziert wird.

Das oder die Füllelemente können als Schaumstoffe oder Schaumkörper, Hohlkörper oder mit Luft oder Gas gefüllte Körper ausgeführt sein. Unter einem Schaumstoff oder einem Schaumkörper sollen insbesondere Stoffe mit zelliger Struktur und niedriger Dichte verstanden werden. Der Schaumstoff ist vorzugsweise als geschlossenzelliger Schaumstoff ausgeführt. Bevorzugte Schaumstoffe oder Schaumkörper sind Polyurethanschäume (PU-Schäume oder PUR-Schäume), insbesondere wasserfeste PU-Schäume oder Zwei-Komponenten-PU-Schäume. Die Schäume können auch durch ein Imprägnat oder eine Beschichtung feuerfest ausgerüstet sein.

In einer weiteren bevorzugten Ausführungsform bestehen die Füllkörper ganz oder zum Teil aus expandiertem Polypropylen (EPP). EPP wird aus Polypropylen erzeugt und ist ein Schaumstoff aus expandiertem, vorwiegend geschlossenzelligen Schaumstoffpartikeln. EPP besitzt eine geringe Dichte von weniger als 100 kg/m³, je nach Ausführung auch weniger als 50 kg/m³. Außerdem weist EPP nur eine geringe Wasseraufnahme auf, ist umweltfreundlich und frei von chemischen Treibmitteln.

Alternativ oder zusätzlich zu Schaumstoffen können Hohlkörper oder mit Gas oder Luft gefüllte Körper, beispielsweise in der Form von Kugeln, eingesetzt werden. Es ist auch möglich, Granulat, beispielsweise Kunststoffgranulat, als Füllelemente vorzusehen.

Bevorzugt werden Füllkörper verwendet, deren Dichte weniger als 500 kg/m³, bevorzugt weniger als 200 kg/m³, besonders bevorzugt weniger als 100 kg/m³, ganz besonders bevorzugt weniger als 50 kg/m³, beträgt. Auf diese Weise wird das Gesamtgewicht des Gehäuses mit Komponenten nur minimal erhöht, so dass die Schwimmfähigkeit des Gehäuses auch bei Wassereinbruch möglichst erhalten bleibt.

Die Füllkörper dienen auch zur Verbesserung der Unfall- oder Crashsicherheit einer Batterie. Bei einem Unfall können die Füllkörper Bewegungsenergie aufnehmen und den Energieeintrag auf die kritischen Batteriezellen verhindern oder zumindest abmildern.

In einer weiteren Ausführungsform sind an den Füllkörpern Kabel oder andere Komponenten befestigt.

In einer weiteren Ausführungsform der Erfindung umfassen die Füllelemente Substanzen, welche bei Kontakt mit Wasser aufschäumen.

Es ist außerdem von Vorteil, das Gehäuse so zu formen, dass der Hohlraum minimiert wird. Das Design des Gehäuses folgt den im Inneren des Gehäuses untergebrachten Komponenten. Der für Wasser und Gas zur Verfügung stehende Raum wird so weiter minimiert. Batterien sind zum Beispiel meist aus quaderförmigen Zellenblöcken zusammengesetzt. Die Verkabelung und notwendige elektromechanische Komponenten weichen dagegen stark von der Quaderform ab. In diesen Bereichen wird das Gehäuse von Vorteil entsprechend kleiner gebaut.

Erfindungsgemäß wird durch das Vorsehen von Füllkörpern das für eindringendes Wasser zur Verfügung stehende Volumen minimiert. Zusätzlich können Maßnahmen vorgesehen sein, welche nach dem Eindringen von Wasser und der Bildung von Wasserstoff eine Explosion des Gehäuses verhindern, indem eine Öffnung in dem Gehäuse erzeugt wird, welche den Austritt von Wasserstoff erlaubt.

In einer weiteren Ausführungsform weist das Gehäuse daher eine Sollbruchstelle auf. Überschreitet der Druck im Inneren des Gehäuses einen vorgegebenen Druck so bricht das Gehäuse an der Sollbruchstelle auf.

In einer anderen Ausführungsform weist das Gehäuse eine Öffnung auf, welche mit einem federbelasteten Absperrorgan verschlossen ist. Das Absperrorgan verschließt über eine Federkraft die Öffnung des Gehäuses. Übersteigt der Druck im Gehäuseinneren den durch die Feder auf das Absperrorgan ausgeübten Druck, gibt das Absperrorgan die Öffnung frei.

In einer anderen Ausführungsform sind in dem Gehäuse ein Wasserstoffsensor, eine Auswerteeinheit und ein Aktor vorgesehen. Zwischen dem Wasserstoffsensor und der Auswerteeinheit sowie zwischen der Auswerteeinheit und dem Aktor bestehen Signalverbindungen, das heißt, zwischen dem Wasserstoffsensor und der Auswerteeinheit sowie zwischen der Auswerteeinheit und dem Aktor können Signale übermittelt werden. Die Signalverbindung kann durch eine feste Verdrahtung oder durch kabellose Übertragung hergestellt werden. Der Wasserstoffsensor detektiert im Gehäuse vorhandenen Wasserstoff. In Abhängigkeit von der detektierten Wasserstoffkonzentration im Gehäuse wird der Aktor angesteuert. Der Aktor stellt dann eine Öffnung in dem Gehäuse her.

Der Aktor kann als ein pyrotechnisches Element, ein elektromagnetisches Element, ein thermisches Element oder ein chemisches Element ausgeführt sein. Der Aktor erzeugt beispielsweise über eine vorsätzlich ausgelöste Explosion oder chemische Reaktion eine Öffnung in dem Gehäuse. Die Öffnung kann auch dadurch hergestellt werden, dass ein elektromagnetisches Element angesteuert wird, welches über elektromagnetische Wechselwirkung eine Öffnung freigibt oder erzeugt.

Als thermisches Element können hierzu beispielsweise verwendet werden:
- Ein Heizdraht, der das Gehäuse oder einen Teil des Gehäuses durchschmilzt und dadurch eine Öffnung in dem Gehäuse bildet.
- Eine mit einem Heizwiderstand versehene Kapsel oder Patrone, die nach Aktivierung das Gehäuse oder einen Teil des Gehäuses durchschmilzt.

Mögliche chemische Elemente zur Erzeugung einer Öffnung in dem Gehäuse können sein:
- Eine oder mehrere chemische Substanzen, die elektronisch getriggert werden, um Hitze zu erzeugen, die das Gehäuse oder einen Teil des Gehäuses durchschmelzen.
- Substanzen, die entsprechend getriggert oder aktiviert werden, so dass diese das Gehäusematerial oder einen Teil davon zersetzen.

In einer weiteren Variante besteht zumindest ein Teil des Gehäuses aus einem nicht wasserfestem Material. Der Begriff "nicht wasserfest" soll hierbei bedeuten, dass das Material bei Überschreiten einer vorgegebenen Spezifikation, beispielsweise entsprechend der Schutznorm IP67, bricht, sich auflöst oder anderweitig versagt und Wasser in das Gehäuse eindringen kann. Ein Teil des Gehäuses kann auch mit einem Kleber mit dem restlichen Gehäuse verbunden sein, wobei der Kleber bei Betrieb über der Spezifikation (z.B. IP67) seine Klebekraft verliert.

Das erfindungsgemäße Gehäuse dient insbesondere zur Aufnahme einer Batterie oder eines Akkumulators, insbesondere eines Lithiumionen enthaltenden Akkumulators. Die in dem Gehäuse befindliche elektrische Komponente kann aber beispielsweise auch ein Elektromotor oder eine elektrische oder elektronische Steuer- oder Regeleinheit sein. Auch andere maritime Komponenten, das heißt elektrische oder elektronische Komponenten, die auf einem Boot verwendet werden, wie beispielsweise Verteilerboxen, Generatoren, Motoren oder Ladegeräte, können in einem oder mehreren erfindungsgemäßen Gehäusen untergebracht werden.

Die Erfindung wird von Vorteil auf Booten oder anderen Wasserfahrzeugen eingesetzt, da hier die Gefahr eines Wassereinbruchs in das Gehäuse besonders groß ist.

Die Erfindung sowie weitere Einzelheiten der Erfindung werden im Folgenden anhand der schematischen Zeichnungen beispielhaft erläutert. Hierbei zeigen:
- Figur 1: eine erste Ausführungsform des erfindungsgemäßen Gehäuses und
- Figur 2: eine zweite Ausführungsform der Erfindung im trockenen Zustand und
- Figur 3: die zweite Ausführungsform nach Kontakt mit Wasser.

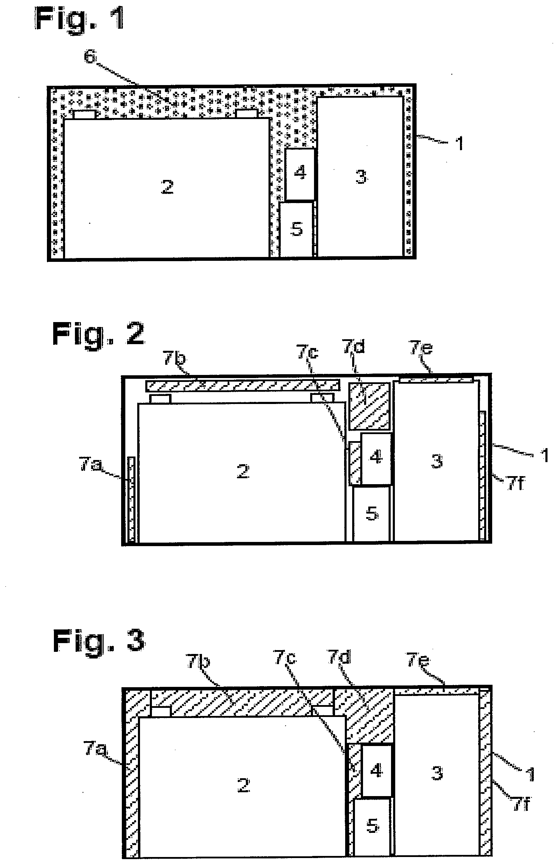

In Figur 1 ist ein Gehäuse 1 dargestellt, welches zur Aufnahme einer Batterie 2 und weiterer elektrischer oder elektronischer Komponenten 3, 4, 5 an Bord eines Bootes dient. Das Gehäuse 1 ist quaderförmig ausgeführt. Die Batterie 2 und die weiteren Komponenten 3, 4, 5 füllen den Innenraum des Gehäuses 1 nicht vollständig aus. Zwischen den einzelnen Komponenten und zwischen der Gehäusewand und den Komponenten 3, 4, 5 bzw. zwischen der Gehäusewand und der Batterie 2 verbleibt teilweise ein Hohlraum. Der Hohlraum wird mit kleinen Füllkörpern 6 gefüllt. Als Füllkörper 6 werden beispielsweise Schaumstoff- oder Styroporkügelchen verwendet.

In Figur 2 ist eine andere Ausführungsform der Erfindung gezeigt. In allen Figuren sind identische Elemente mit denselben Bezugsziffern gekennzeichnet.

Bei der Ausführung nach Figur 2 werden in die Hohlräume zwischen den Komponenten 3, 4, 5 bzw. der Batterie 2 und den Gehäusewänden Füllkörper 7a, 7b, 7c, 7d, 7e, 7f eingebracht, welche die Hohlräume im trockenen Zustand nicht vollständig ausfüllen. Die Füllkörper 7a, 7b, 7c, 7d, 7e, 7f bestehen vollständig oder teilweise aus Schaumstoffen, welche bei Kontakt mit Wasser aufschäumen und ihr Volumen vergrößern.

In Figur 3 ist dasselbe Gehäuse gezeigt, nachdem in das Innere des Gehäuses Wasser eingedrungen ist und die Füllkörper 7a, 7b, 7c, 7d, 7e, 7f nass geworden sind.

Die Füllkörper 7a, 7b, 7c, 7d, 7e, 7f sind aufgeschäumt und haben ihr Volumen soweit vergrößert, dass nahezu alle Hohlräume in dem Gehäuse 1 ausgefüllt sind.

Wenn beispielsweise das Gehäuse 1 mit der Batterie 2 und den Komponenten 3, 4, 5 in Wasser fällt, schäumen die Füllkörper 7a, 7b, 7c, 7d, 7e, 7f auf und das Innere des Gehäuses 1 ist fast vollständig gefüllt. Es verbleibt kaum Platz für in das Gehäuse 1 eindringendes Wasser beziehungsweise bereits im Gehäuse 1 befindliches Wasser wird aus dem Gehäuse 1 verdrängt.

Die Füllkörper 7a, 7b, 7c, 7d, 7e, 7f haben eine geringe Dichte von weniger als 100 kg/m³. Das spezifische Gesamtgewicht des Gehäuses 1 mit Batterie 2, Komponenten 3, 4, 5 und den Füllkörpern 7a, 7b, 7c, 7d, 7e, 7f ist damit geringer als das von Wasser, so dass das Gehäuse 1 schwimmt. Das erfindungsgemäße Gehäuse 1 wird daher mit besonderem Vorteil auf einem Boot eingesetzt.

## Patentansprüche

1. Gehäuse (1) für elektrische Komponenten in Booten, wobei das Gehäuse (1) wasserdicht ausgestaltet ist und eine oder mehrere Komponenten (3, 4, 5) enthält, wobei mindestens eine der Komponenten (3, 4, 5) eine elektrische Komponente ist, wobei mindestens eine der elektrischen Komponenten (3, 4, 5) eine Batterie (2) oder ein Akkumulator, insbesondere ein Lithiumionen enthaltender Akkumulator, ist, wobei die Komponenten(3, 4, 5) das Gehäuse (1) nicht vollständig ausfüllen und innerhalb des Gehäuses (1) ein Hohlraum verbleibt, wobei in dem Hohlraum ein oder mehrere Füllelemente (7) vorgesehen sind, **dadurch gekennzeichnet, dass** die Füllelemente (7) durch in das Gehäuse (1) eindringendes Wasser bei Kontakt mit dem Wasser ihr Volumen derart ändern, dass sie den Hohlraum zu mehr als der Hälfte ausfüllen.

2. Gehäuse (1) nach Anspruch 1, **dadurch gekennzeichnet, dass** die Füllelemente (7) als Schaumkörper, Hohlkörper oder mit Luft oder Gas gefüllte Körper ausgeführt sind.

3. Gehäuse (1) nach einem der Ansprüche 1 oder 2, **dadurch gekennzeichnet, dass** die Füllelemente (7) Substanzen umfassen, welche bei Kontakt mit Wasser ihr Volumen vergrößern.

4. Gehäuse (1) nach einem der vorhergehenden Ansprüche, **dadurch gekennzeichnet, dass** die Füllelemente (7) bei Kontakt mit Wasser den Hohlraum zu mehr als 70%, zu mehr als 80% oder zu mehr als 90% ausfüllen.

5. Gehäuse (1) nach einem der vorhergehenden Ansprüche, **dadurch gekennzeichnet, dass** die Dichte der Füllelemente (7) weniger als 500 kg/m3, bevorzugt weniger als 200 kg/m3, besonders bevorzugt weniger als 100 kg/m3, ganz besonders bevorzugt weniger als 50 kg/m3, beträgt.

6. Gehäuse (1) nach einem der vorhergehenden Ansprüche, **dadurch gekennzeichnet, dass** die elektrische Komponente ein Elektromotor oder eine elektrische oder elektronische Steuer- oder Regeleinheit ist.

7. Gehäuse (1) nach einem der vorhergehenden Ansprüche, **dadurch gekennzeichnet, dass** das Gehäuse (1) eine Sollbruchstelle aufweist.

8. Gehäuse (1) nach einem der vorhergehenden Ansprüche, **dadurch gekennzeichnet, dass** das Gehäuse (1) eine Öffnung aufweist, welche mit einem federbelasteten Absperrorgan verschlossen ist.

9. Gehäuse (1) nach einem der vorhergehenden Ansprüche, **dadurch gekennzeichnet, dass** in dem Gehäuse (1) ein Wasserstoffsensor, eine Auswerteeinheit und ein Aktor vorgesehen sind, wobei Signalverbindungen zwischen dem Wasserstoffsensor und der Auswerteeinheit sowie zwischen der Auswerteeinheit und dem Aktor vorgesehen sind, und wobei der Aktor bei Detektion eines über einem Mindestwert liegenden Wasserstoffgehalt eine Öffnung in dem Gehäuse (1) herstellt.

10. Gehäuse (1) nach Anspruch 9, **dadurch gekennzeichnet, dass** der Aktor als ein pyrotechnisches Element, ein elektromagnetisches Element, ein thermisches Element oder ein chemisches Element ausgeführt ist.

11. Gehäuse (1) nach einem der vorhergehenden Ansprüche, **dadurch gekennzeichnet, dass** zumindest ein Teil des Gehäuses (1) aus einem nicht wasserfestem Material besteht.

12. Gehäuse (1) nach einem der vorhergehenden Ansprüche, **dadurch gekennzeichnet, dass** die Füllelemente (7) zumindest teilweise, bevorzugt zu mehr als 70 vol-%, mehr als 80 vol-%, mehr als 90 vol-% oder vollständig, aus expandiertem Polypropylen bestehen.

13. Boot, welches ein Gehäuse (1) nach einem der vorhergehenden Ansprüche enthält.

## Claims

1. Casing (1) for electric components in boats, wherein the casing (1) is configured to be water-tight and includes one or more components (3, 4, 5), wherein at least one of the components (3, 4, 5) is an electric component, wherein at least one of the electric components (3, 4, 5) is a battery (2) or an accumulator, more particularly an accumulator including lithium ions, wherein the components (3, 4, 5) do not fill the casing (1) completely and a hollow space remains inside the casing (1), wherein one or more filling elements (7) are provided in the hollow space, **characterised in that**, as a result of water penetrating into the casing (1), the filling elements (7) change their volume upon contact with the water, such that they more than half fill the hollow space.

2. Casing (1) according to claim 1, **characterised in that** the filling elements (7) are designed as foam bodies, hollow bodies or bodies filled with air or gas.

3. Casing (1) according to any one of claims 1 or 2, **characterised in that** the filling elements (7) comprise substances which increase their volume upon contact with water.

4. Casing (1) according to any one of the preceding claims, **characterised in that** the filling elements (7) fill more than 70%, more than 80% or more than 90% of the hollow space upon contact with water.

5. Casing (1) according to any one of the preceding claims, **characterised in that** the density of the filling elements (7) is less than 500 kg/m3, preferably less than 200 kg/m3, particularly preferably less than 100 kg/m3, very particularly preferably less than 50 kg/m3.

6. Casing (1) according to any one of the preceding claims, **characterised in that** the electric component is an electric motor or an electric or electronic open- or closed-loop control unit.

7. Casing (1) according to any one of the preceding claims, **characterised in that** the casing (1) has a predetermined breaking point.

8. Casing (1) according to any one of the preceding claims, **characterised in that** the casing (1) has an opening which is closed with a spring-loaded shut-off device.

9. Casing (1) according to any one of the preceding claims, **characterised in that** a hydrogen sensor, an evaluation unit and an actuator are provided in the casing (1), wherein signal connections are provided between the hydrogen sensor and the evaluation unit and also between the evaluation unit and the actuator, and wherein the actuator establishes an opening in the casing (1) upon the detection of a hydrogen content that is above a minimum value.

10. Casing (1) according to claim 9, **characterised in that** the actuator is designed as a pyrotechnic element, an electromagnetic element, a thermal element or a chemical element.

11. Casing (1) according to any one of the preceding claims, **characterised in that** at least a part of the casing (1) consists of a non-water-resistant material.

12. Casing (1) according to any one of the preceding claims, **characterised in that** the filling elements (7) consist at least in part, preferably more than 70 vol.%, more than 80 vol.%, more than 90 vol.% or completely, of expanded polypropylene.

13. Boat including a casing (1) according to any one of the preceding claims.

## Revendications

1. Boîtier (1) pour des composants électriques dans des bateaux, dans lequel le boîtier (1) est conçu étanche à l'eau et inclut un ou plusieurs composants (3, 4, 5), dans lequel au moins un des composants (3, 4, 5) est un composant électrique, dans lequel au moins un des composants électriques (3, 4, 5) est une batterie (2) ou un accumulateur, en particulier un accumulateur incluant des ions de lithium, dans lequel les composants (3, 4, 5) ne remplissent pas complètement le boîtier (1) et il reste un espace creux à l'intérieur du boîtier (1), dans lequel un ou plusieurs éléments de remplissage (7) sont prévus dans l'espace creux, **caractérisé en ce que**, au contact de l'eau, les éléments de remplissage (7) changent de volume à cause de l'eau entrant dans le boîtier (1) de telle sorte qu'ils remplissent plus de la moitié de l'espace creux.

2. Boîtier (1) selon la revendication 1, **caractérisé en ce que** les éléments de remplissage (7) sont réalisés sous forme de corps en mousse, de corps creux ou de corps remplis d'air ou de gaz.

3. Boîtier (1) selon l'une quelconque des revendications 1 ou 2, **caractérisé en ce que** les éléments de remplissage (7) comprennent des substances qui augmentent leur volume au contact de l'eau.

4. Boîtier (1) selon l'une quelconque des revendications précédentes, **caractérisé en ce que**, au contact de l'eau, les éléments de remplissage (7) remplissent l'espace creux à plus de 70 %, à plus de 80 % ou à plus de 90 %.

5. Boîtier (1) selon l'une quelconque des revendications précédentes, **caractérisé en ce que** la densité des éléments de remplissage (7) est inférieure à 500 kg/m3, de manière préférée inférieure à 200 kg/m3, de manière particulièrement préférée inférieure à 100 kg/m3, de manière très particulièrement préférée inférieure à 50 kg/m3.

6. Boîtier (1) selon l'une quelconque des revendications précédentes, **caractérisé en ce que** le composant électrique est un moteur électrique ou une unité de commande ou de régulation électrique ou électronique.

7. Boîtier (1) selon l'une quelconque des revendications précédentes, **caractérisé en ce que** le boîtier (1) comporte une zone destinée à la rupture.

8. Boîtier (1) selon l'une quelconque des revendications précédentes, **caractérisé en ce que** le boîtier (1) comporte une ouverture qui est fermée par un organe d'arrêt soumis à un ressort.

9. Boîtier (1) selon l'une quelconque des revendications précédentes, **caractérisé en ce qu'**il est prévu dans le boîtier (1) un capteur d'hydrogène, une unité d'évaluation et un actionneur, dans lequel des liaisons de signaux sont prévues entre le capteur d'hydrogène et l'unité d'évaluation ainsi qu'entre l'unité d'évaluation et l'actionneur et dans lequel, lors de la détection d'une teneur en hydrogène supérieure à une valeur minimale, l'actionneur crée une ouverture dans le boîtier (1).

10. Boîtier (1) selon la revendication 9, **caractérisé en ce que** l'actionneur est réalisé comme un élément pyrotechnique, un élément électromagnétique, un élément thermique ou un élément chimique.

11. Boîtier (1) selon l'une quelconque des revendications précédentes, **caractérisé en ce qu'**au moins une partie du boîtier (1) est en un matériau non résistant à l'eau.

12. Boîtier (1) selon l'une quelconque des revendications, **caractérisé en ce que** les éléments de remplissage (7) sont au moins partiellement, de préférence pour plus de 70% en volume, plus de 80% en volume, plus de 90% en volume, ou entièrement en polypropylène expansé.

13. Bateau qui inclut un boîtier (1) selon l'une quelconque des revendications précédentes.
